# EUROPEAN PATENT APPLICATION

(11) **EP 2 157 294 A1**
(43) Date of publication of application: **24.02.2010**
(21) Application number: 08721795.6
(22) Date of filing: 11.03.2008
(51) Int. Cl.: F01N 3/08, B01D 53/94, F01N 3/02, F01N 3/24, F01N 3/36, B01D 46/42

(54) **APPARATUS FOR PURIFYING EXHAUST GAS OF INTERNAL COMBUSTION ENGINE**

(30) Priority: 12.03.2007 JP 2007062160
(71) Applicant: Toyota Jidosha Kabushiki Kaisha, Toyota-shi, Aichi-ken 471-8571 (JP)
(72) Inventor: HIRATA, Hirohito, Toyota-shi Aichi 471-8571 (JP); IBE, Masaya, Toyota-shi Aichi 471-8571 (JP); MATSUBARA, Hiroyuki, Toyota-shi Aichi 471-8571 (JP); KAMADA, Masaya, Toyota-shi Aichi 471-8571 (JP)
(74) Representative: Winter, Konrad Theodor
(86) International application number: PCT/JP2008/054379
(87) International publication number: WO 2008/126566

(57) **Abstract**

This invention is intended to ensure that an exhaust gas purification device with an NOx storage reduction catalyst and a particulate filter is able to fully utilize an original NOx storage capability of the NOx storage reduction catalyst. For this end, in addition to the filter 40 disposed upstream relative to the NOx storage reduction catalyst 22, the purification device includes a fuel supply element 42 for supplying a fuel so that the fuel is mixed with exhaust gas that flows into the filter, and an ozone feeder 30 for supplying ozone so that the ozone is mixed with exhaust gas that flows into the NOx storage reduction catalyst at a downstream position relative to the filter 40.

## Description

### Technical Field

The present invention relates generally to exhaust gas purification devices for internal combustion engines, and more particularly, to an exhaust gas purification device including an NOx storage reduction catalyst and a particulate filter.

### Background Art

As disclosed in the patent documents listed below, exhaust gas purification devices with a filter and an NOx storage reduction catalyst arranged in that order from upstream toward downstream on the exhaust passages in internal combustion engines, especially, diesel engines, are traditionally known (the NOx storage reduction catalyst is hereinafter referred to as the NSR catalyst). In these purification devices, the particulates contained in exhaust gas can be captured with the filter. Additionally, NOx whose purification becomes insufficient under a lean atmosphere can be captured with the NSR catalyst.

In the above exhaust gas purification devices, a process for removing the captured particulates from the filter (hereinafter, this process is referred to as the regeneration of the filter) is needed to prevent increases in exhaust resistance due to filter clogging. A known way to remove particulates from such a filter is by adding fuel to exhaust gas upstream relative to the filter and increasing the temperature of the exhaust gas flowing into the filter. Enhancing the temperature of the exhaust gas allows the particulates to be burned by utilizing the heat.

The above exhaust gas purification devices also require a process for removing stored NOx from the NSR catalyst (hereinafter, this process is referred to as the regeneration of the NSR catalyst). A known way to remove stored NOx from an NSR catalyst is by adding fuel to exhaust gas upstream relative to the NSR catalyst and making rich the air-fuel ratio of the exhaust gas flowing into the NSR catalyst. Making the exhaust gas rich in air-fuel ratio allows the stored NOx to be reduced and purified by means of the HC or CO contained in the exhaust gas. The reduction of the stored NOx by the HC or the CO is a reaction occurring when the NSR catalyst is sufficiently warmed. Accordingly, not all chemical potentials of the fuel added to the exhaust gas during the regeneration of the NSR catalyst will be used to reduce the stored NOx. Instead, one portion or a large portion of the chemical potential will be used to heat the NSR catalyst.
Patent Document 1: JP-A-2002-89240
Patent Document 2: JP-A-2005-538295
Patent Document 3: JP-A-2006-522272
Patent Document 4: JP-A-2000-297633
Patent Document 5: JP-A-2002-188432

### Disclosure of the Invention

### Problem to be Solved by the Invention

Neither the fuel consumed during the regeneration of the filter, nor the fuel consumed during the regeneration of the NSR catalyst contributes to enhancing the output energy of the internal combustion engine. The fuel efficiency of the internal combustion engine, therefore, can be correspondingly improved if the fuel consumption can be reduced. One method of achieving this is by utilizing the heat generated by the regeneration of the filter for regenerating the NSR catalyst. During the regeneration of the filter, the combustion of the added fuel generates heat and at the same time, the combustion of particulates also generates heat. If such heat is used to warm the NSR catalyst, only the amount of fuel consumed to chemically reduce stored NOx will be required as the fuel consumption for the regeneration of the NSR catalyst.

In fact, however, there is a significant gap between the period at which the regeneration of the filter is executed, and the period at which the regeneration of the NSR catalyst is executed. The regenerating period of the NSR catalyst, compared with that of the filter, is extremely short and the heat generated during the regeneration of the filter has substantially no chance of being used for regenerating the NSR catalyst. To extend the regenerating period of the NSR catalyst, there is a need to make the NSR catalyst store NOx in greater quantities. The original NOx-storing capability of the NSR catalyst, however, is not fully utilized in conventional exhaust gas purification devices. If the original NOx-storing capability of the NSR catalyst can be fully utilized, this will allow the regenerating period of the NSR catalyst to be brought close to that of the filter. The heat generated during the regeneration of the filter will be consequently useable to regenerate the NSR catalyst.

The present invention has been made for solving the above problem, and an object of the invention is to provide an exhaust gas purification device including an NOx storage reduction catalyst and a particulate filter, in the purification device of which, the NOx storage reduction catalyst can fully utilize its original capability to store NOx.

### MEANS FOR SOLVING THE PROBLEM

In order to attain the object described above, a first aspect of the present invention is an exhaust gas purification device for an internal combustion engine, comprising:
an NOx storage reduction catalyst disposed on an exhaust passage of the internal combustion engine;
a filter disposed upstream relative to the NOx storage reduction catalyst, the filter being used to capture particulates contained in exhaust gas;
means for supplying a fuel such that the fuel will be mixed with the exhaust gas flowing into the filter; and
means for supplying ozone downstream with respect to the filter such that the ozone will be mixed with the exhaust gas flowing into the NOx storage reduction catalyst.

A second aspect of the present invention is the exhaust gas purification device for the internal combustion engine according to the first aspect of the present invention, further comprising:
second means for supplying the fuel downstream with respect to the filter such that the fuel will be mixed with the exhaust gas flowing into the NOx storage reduction catalyst.

A third aspect of the present invention is the exhaust gas purification device for the internal combustion engine according to the first aspect of the present invention, wherein the fuel supply means is adapted to:
during regeneration of the filter, execute fuel supply while controlling a supply quantity of the fuel such that an air-fuel ratio of the exhaust gas flowing into the filter will be lean; and
after the regeneration of the filter, continue a predetermined period of fuel supply while controlling the supply quantity of the fuel such that the air-fuel ratio of the exhaust gas flowing into the filter will be rich.

A fourth aspect of the present invention is the exhaust gas purification device for the internal combustion engine according to the second aspect of the present invention, wherein:
during regeneration of the filter, the fuel supply means executes fuel supply while controlling a supply quantity of the fuel such that an air-fuel ratio of the exhaust gas flowing into the filter will be lean; and
during the execution of fuel supply by the fuel supply means, the second means for supplying the fuel executes a predetermined period of fuel supply while controlling a supply quantity of the fuel such that the air-fuel ratio of the exhaust gas flowing into the NOx storage reduction catalyst will be rich.

### Effects of the Invention

According to the first aspect of the present invention, supplying ozone such that the ozone will be mixed with the exhaust gas flowing into the NOx storage reduction catalyst allows accelerated oxidation of any NOx substances contained in the exhaust gas, and hence, accelerated storage of the NOx into the NOx storage reduction catalyst. In particular, if the amount of ozone to be supplied is controlled for a molar quantity of the ozone in the exhaust gas to be larger than a molar quantity of NO, nitrogen oxides of an order higher than that of NO₂, such as NO₃ and N₂O₅ can be generated. The same also applies to HNO₃ if moisture is present. Generating the above nitrogen oxides of a higher order enables the NOx storage reduction catalyst to further accelerate its internal NOx storage reaction.

It is possible, by accelerating the storage of NOx in the NOx storage reduction catalyst, to make the catalyst store a greater amount of NOx, and thus to extend a regenerating period of the NOx storage reduction catalyst. If the regenerating period of the NOx storage reduction catalyst is extended, heat that is generated during regeneration of the filter will have more chances to be utilized for the regeneration of the NOx storage reduction catalyst. Consumption of the fuel required for the regeneration of the NOx storage reduction catalyst and that of the filter, can be consequently suppressed, which allows the internal combustion engine to be improved in fuel efficiency.

According to the second aspect of the present invention, the fuel can be supplied to the NOx storage reduction catalyst without being passed through the filter. The fuel can also be simultaneously supplied in divided form to two sections, namely, an upstream side of the filter and that of the NOx storage reduction catalyst. In this way, the fuel can be supplied in any one or more of selectable plural forms to make more effective use of the fuel.

According to the third aspect of the present invention, the filter can be regenerated and at the same time, the heat generated during the regeneration of the filter can be used to warm the NOx storage reduction catalyst. After the regeneration of the filter, the NOx storage reduction catalyst can be regenerated efficiently by supplying the exhaust gas of a rich air-fuel ratio to the NOx storage reduction catalyst that has been warmed to high enough a temperature.

According to the fourth aspect of the present invention, the filter can be regenerated and at the same time, the heat generated during the regeneration of the filter can be used to warm the NOx storage reduction catalyst. Additionally, a lean atmosphere in the filter and a rich atmosphere in the NOx storage reduction catalyst can both be created at the same time by supplying the fuel in divided form to two different sections. This makes the regeneration of the NOx storage reduction catalyst simultaneously achievable with that of the filter, thus making more effective use of the heat generated during the regeneration of the filter.

### Brief Description of the Drawings

Fig. 1 is a diagram illustrating an exhaust gas purification device configuration in a first embodiment of the present invention.
Fig. 2 is a flowchart representing a routine executed in the first embodiment of the present invention.
Fig. 3 is a diagram illustrating an exhaust gas purification device configuration in a second embodiment of the present invention.
Fig. 4 is a flowchart representing a routine executed in the second embodiment of the present invention.

- 10: engine
- 12: exhaust passage
- 20: catalytic converter
- 22: NOx storage reduction catalyst
- 30: ozone feeder
- 32: gas injection port
- 40: DPF
- 42, 44: fuel injector
- 50: controller
- 52: differential pressure sensor
- 54, 58: air-fuel ratio sensor
- 56: NOx sensor

### Best Mode for Carrying Out the Invention

### (First Embodiment)

### Exhaust gas purification device configuration in a first embodiment

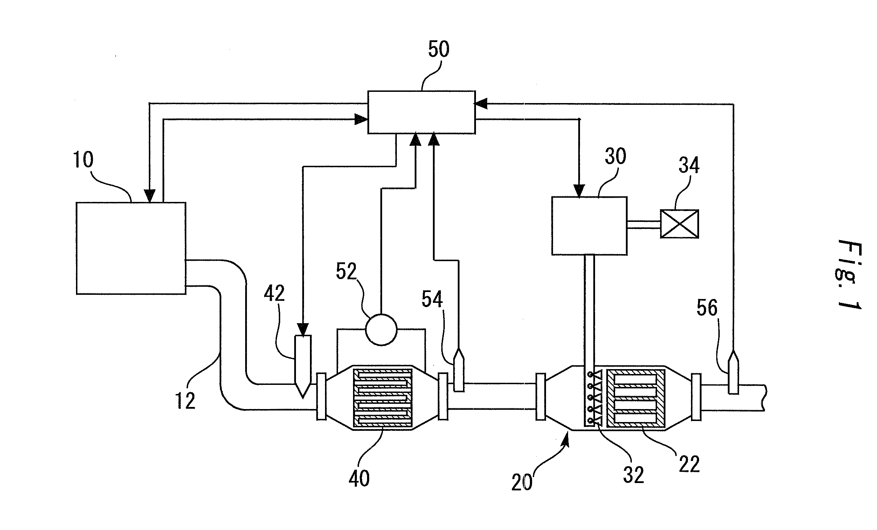

The present invention is suitable for an internal combustion engine which is placed in lean-burn operation, especially, a diesel engine. In the present embodiment, the invention is applied to a diesel engine. Fig. 1 is a diagram illustrating an exhaust gas purification device configuration in a first embodiment of the invention. The exhaust gas purification device configuration in the first embodiment is described below using Fig. 1.

As shown in Fig. 1, the exhaust gas purification device of the first embodiment includes a diesel particulate filter (hereinafter, referred to as DPF) 40 and a catalytic converter 20, in an exhaust passage 12 of a diesel engine (hereinafter, referred to simply as engine) 10. The catalytic converter 20 is disposed downstream relative to the DPF 40. In such a configuration, exhaust gas from the engine 10 first have any particulates removed by the DPF 40, and then have any NOx, HC, and CO substances purified by the catalytic converter 20 before the exhaust gas are released to the atmosphere.

A fuel injector 42 is installed near an inlet of the DPF 40 on the exhaust passage 12, and the same fuel as used for operating the engine 10 is injected from the fuel injector 42.

An NOx storage reduction catalyst (hereinafter, referred to as NSR catalyst) 22 is accommodated in the catalytic converter 20. A noble metal such as platinum Pt, and BaCO₃ are supported on a ceramic support to constitute the NSR catalyst 22, with Pt functioning as an active site that simultaneously activates an oxidation reaction of CO, HC and a reducing reaction of NOx, and BaCO₃ functioning as an NOx-retaining substance to occlude the NOx contained in the exhaust gas in the form of a nitrate. More specifically, NOx is occluded as Ba(NO₃)₂ in BaCO₃. The stored Ba(NO₃)₂ is reduced and decomposed primarily under a rich state of the exhaust gas. The NOx-retaining substance, however, not only occludes NOx, but may also adsorb NOx.
For this reason, the "retaining" action of the NOx-retaining substance connotes "adsorbing" the NOx as well as "occluding" the NOx.

A gas injection port 32 is provided at an upstream side of the NSR catalyst 22 within the catalytic converter 20. The gas injection port 32 is connected to an ozone feeder 30. The ozone feeder 30 contains an ozonizer that creates ozone by use of air obtained from an air suction port 34. Further detailed description of the ozonizer is omitted herein since various techniques concerning its configuration and functionality are already known. The ozone feeder 30 supplies internally created ozone from the gas injection port 32 to the inside of the catalytic converter 20. Inside the catalytic converter 20, the ozone supplied from the ozone feeder 30 gets mixed with the exhaust gas flowing in through the exhaust passage 12, and then the mixed gas flows into the NSR catalyst 22.

The exhaust gas purification device of the present embodiment includes a plurality of sensors for obtaining information on states of the purification device. More specifically, the DPF 40 has a differential pressure sensor 52 that outputs a signal commensurate with a differential pressure between an inlet and outlet of the DPF. An air-fuel ratio sensor 54 that outputs a signal commensurate with an air-fuel ratio of the exhaust gas is mounted near the outlet of the DPF 40 on the exhaust passage 12. Also, an NOx sensor 56 that detects NOx is mounted near an outlet of the catalytic converter 20 on the exhaust passage 12.

The exhaust gas purification device of the present embodiment also includes a controller 50 that controls operation of the purification device. The above-described ozone feeder 30 and fuel injector 42 are connected to an output section of the controller 50. The above-described sensors 52, 54, 56 are connected to an input section of the controller 50. Information on operating parameters and operating states of the engine 10 is also input to the input section of the controller 50. Upon receiving the various input information, the controller 50 controls the ozone feeder 30 and the fuel injector 42 in accordance with a predetermined control program.

### Exhaust gas purification device operation in the first embodiment

Next, the operation of the exhaust gas purification device of the present embodiment will be described.

### (Ozone-aided NOx storage into the NSR catalyst)

Compared with HC and CO, a large amount of NOx is contained in the exhaust gas from the engine 10 during lean-burn operation thereof. According to the configuration shown in Fig. 1, the NOx contained in the exhaust gas can be stored using the NSR catalyst 22. As described below, the present embodiment utilizes ozone to improve the NSR catalyst 22 in NOx storage capability.

During lean-burn operation in the present embodiment, the engine 10 activates the ozone feeder 30 to supply ozone to the catalytic converter 20. It is known that when ozone is added to exhaust gas, the NOx contained in the exhaust gas will be oxidized by a gas-phase reaction. More specifically, the NOx and the ozone will react upon each other to develop the reactions shown in reaction formulae (1) to (3) that follow. Reaction formula (3) is shown only with an arrow that indicates a rightward reaction, but such a leftward reaction as enclosed in brackets below can also occur.

NO + O₃ → NO₂ + O₂ (1)

NO₂ + O₃ → NO₃ O₂ (2)

NO₂ + NO₃ → N₂O₅ (N0₂ + NO₃ ← N₂O₅) (3)

After the oxidation of the NOx, the NOx-retaining substance occludes the resulting nitrogen oxides of a high order (or HNO₃ generated by reactions of these nitrogen oxides with water). The NOx occlusion occurring with the NOx-retaining substance is thus achieved. For instance, when converted into a nitrate such as Ba (NO₃)₂, NO₃ is occluded by an NOx occluding material. As shown in above reaction formulae (1) to (3), therefore, when ozone is added to exhaust gas, the high-order nitrogen oxides that the NOx-retaining substance easily occludes can be created efficiently. That is to say, the NOx storage capability of the NSR catalyst 22 can be enhanced.

To obtain an NOx storage reaction more efficiently, it is desirable that the NOx in the exhaust gas be converted into higher-order nitrogen oxides containing larger amounts of NO₃, N₂O₅, and/or the like. In the present embodiment, therefore, the quantity of ozone to be supplied is controlled so that a molar ratio of the ozone to NO is greater than 1 in a mixture of the exhaust gas and the ozone. The control of the ozone supply quantity is conducted by the controller 50. On the basis of the information relating to an engine speed, fuel injection quantity, and other operating parameters of the engine 10, the controller 50 estimates and calculates the quantity of NO in the exhaust gas and controls the ozone feeder 30 to supply an appropriate quantity of ozone according to the estimated quantity of NO.

Under a state with a molar ratio of the ozone equal to or less than 1 to the NO contained in the mixed gas, although the reaction in reaction formula (1) generates NO₂, the reaction in reaction formula (2) or (3) does not lead to generating NO₃ or N₂O₅. If the molar ratio of the ozone to the NO contained in the mixed gas is increased above 1, however, this makes it possible to supply an enough amount of ozone for oxidizing the NO into NO₃ and N₂O₅. Consequently, a total quantity of high-order nitrogen oxides contained in the exhaust gas can be increased reliably and the NOx can be stored more effectively.

Alternatively, the quantity of ozone to be supplied is preferably controlled to obtain a molar ratio of at least 2 of the ozone to the NO in the mixed gas. This alternative method allows a large portion of the NO to be oxidized into NO₃ and N₂O₅, and the quantity of NOx storage into the NSR catalyst 22 to be increased remarkably.

### (DPF regeneration and NSR catalyst regeneration)

The regeneration of the DPF 40 is a process for preventing increases in exhaust resistance due to clogging of the DPF 40, and this process is executed upon detection of the clogging of the DPF 40 by the differential pressure sensor 52. More specifically, combustion heat of the fuel injected from the fuel injector 42 heats the DPF 40. Particulates that the DPF 40 has captured are burned by the heating of the DPF, and removed therefrom. Since oxygen is needed to burn the particulates, an injection quantity of the fuel from the fuel injector42 is controlled so that the exhaust gas flowing into the DPF 40 will be a lean air-fuel ratio.

The regeneration of the NSR catalyst 22 is a process for recovering the NOx storage capability of the NSR catalyst 22 by removing stored NOx from the NSR catalyst 22. More specifically, the NSR catalyst 22 is heated and the air-fuel ratio of the exhaust gas flowing thereinto is temporarily enhanced for a rich air-fuel ratio. The stored NOx within the NSR catalyst 22 is reduced by the HC and CO contained in the exhaust gas, and then removed from the NSR catalyst 22. The air-fuel ratio of the exhaust gas flowing into the NSR catalyst 22 can be adjusted according to the particular fuel injection quantity of the fuel injector 42.

Heat that has been generated during the regeneration of the DPF 40 can be utilized to regenerate the NSR catalyst 22. During the regeneration of the DPF 40, combustion of the fuel injected from the fuel injector 42 generates heat and at the same time, the combustion of the particulates also generates heat. Much of the fuel injected from the fuel injector 42 can be used for the reduction of the stored NOx if such heat is utilized to heat the NSR catalyst 22.

To ensure that the heat generated during the regeneration of the DPF 40 is utilized to regenerate the NSR catalyst 22, it is preferable that a regenerating period of the NSR catalyst 22 be as long as possible. This is because the DPF 40 is of an extremely long regenerating period. As described above, the exhaust gas purification device of the present embodiment allows the NOx storage quantity of the NSR catalyst 22 to be increased by utilizing ozone, and thus the regenerating period of the NSR catalyst 22 to be extended.

### (More specific processing by the controller)

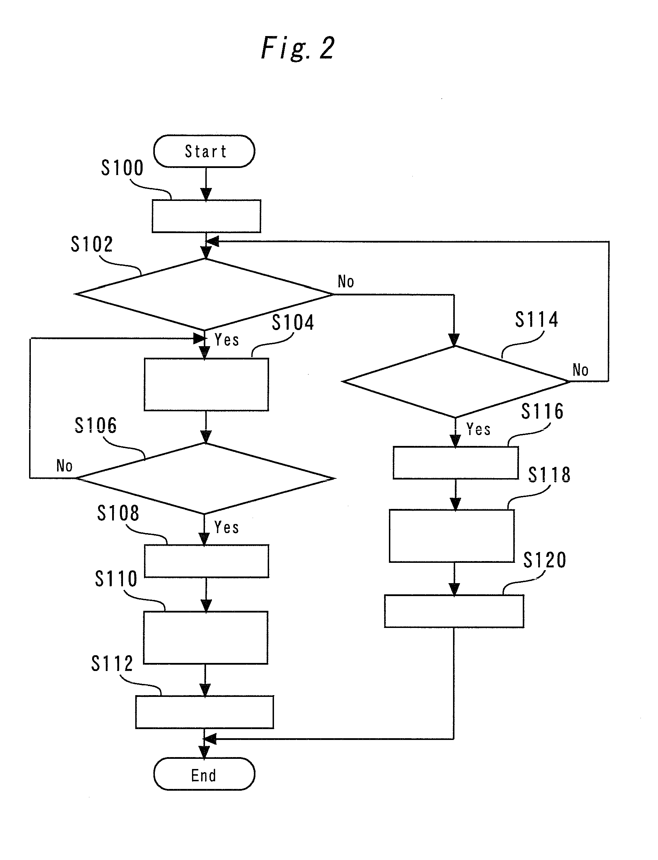

Hereunder, more specific processing that the controller 50 conducts will be described using Fig. 2. Fig. 2 is a flowchart representing a routine executed by the controller 50 in the present embodiment. The above-described addition of ozone and regeneration of the DPF40 and NSR catalyst 22 are both executed in accordance with the routine shown in Fig. 2.

In first step S100 of the routine shown in Fig. 2, ozone is created from air by the ozone feeder 30 and then the ozone is added to exhaust gas. A gas-phase reaction with the ozone in the catalytic converter 20 accelerates the oxidation of the NOx in the exhaust gas, and hence, storage of the NOx into the NSR catalyst 22.

Whether the clogging of the DPF 40 is detected by the differential pressure sensor 52 is judged in step S102. If the clogging of the DPF 40 is detected, process control advances to step S104 to execute the regeneration of the DPF 40.

In step S104, fuel injection from the fuel injector 42 is executed and fuel is added to the exhaust gas flowing into the DPF 40. The fuel injection quantity of the fuel injector 42 is controlled so that the exhaust gas flowing into the DPF 40 will be a lean air-fuel ratio. An output signal from the air-fuel ratio sensor 54 is fed back during the control of the fuel injection quantity. The fuel that has been injected from the fuel injector 42 is burned upon reacting with the oxygen in the exhaust gas, and the resulting heat creates a high-temperature atmosphere in the DPF 40. Thus, the particulates on the DPF 40 are burned upon reacting with excess oxygen present in the exhaust gas, and are progressively removed from the DPF 40.

Whether the clogging of the DPF 40 is detected by the differential pressure sensor 52 is re-judged in step S106. Process step S104 is continued if the clogging of the DPF 40 is re-detected or still remains detected. Conversely if the clogged state of the DPF 40 is cleared, the regeneration thereof terminates and process control advances to step S108 to execute the regeneration of the NSR catalyst 22.

In step S108, the creation of ozone by the ozone feeder 30 is stopped and the addition of the ozone to the exhaust gas is also stopped.

In next step S110, fuel injection from the fuel injector 42 is continued and fuel is added to the exhaust gas flowing into the DPF 40. A fuel injection quantity of the fuel injector 42 at this time is controlled so that the exhaust gas flowing into the DPF 40 will be a rich air-fuel ratio. An output signal from the air-fuel ratio sensor 54 is fed back during the control of the fuel injection quantity. The NOx stored within the NSR catalyst 22 is reduced by the HC and CO contained in the exhaust gas, and then removed from the NSR catalyst 22 progressively.

During the regeneration of the DPF 40, the heat generated by the combustion of the added fuel and stored particulates raises a temperature of the exhaust gas flowing into the catalytic converter 20. The high-temperature exhaust gas then warm the NSR catalyst 22 and the catalyst temperature upon completion of the regeneration of the DPF 40 rises to, or nearly to, a temperature level required for the regeneration thereof. Therefore, the amount of fuel consumed to heat the NSR catalyst 22 for the regeneration thereof is saved and much of the fuel injected from the fuel injector 42 can be used to reduce the stored NOx.

Fuel addition for regenerating the NSR catalyst 22 is executed only for a required regenerating period calculated from the NOx storage quantity existing immediately before the regeneration. The NOx storage quantity can be estimated and calculated from counts of a cumulative operating period and/or cumulative traveling distance from a previous regenerating process for the NSR catalyst 22. After elapse of the required regenerating period, process control proceeds to step S112 to stop the addition of fuel from the fuel injector 42. This completes the regeneration of the DPF 40 and then completes that of the NSR catalyst 22 as well.

During above successive processing, the NSR catalyst 22 is regenerated timely according to a progress of the regeneration of the DPF 40, but there may be a need to regenerate the NSR catalyst 22 before the DPF 40 requires regeneration. If the clogging of the DPF 40 is not detected in step S102, control is transferred to step S114 for a next judgment. Whether NOx is detected by the NOx sensor 56 is judged in step S114. If no NOx is detected, control is returned to the judgment in step S102. Subsequently, either step S102 or S114 is repeated until a positive judgment has been conducted therein.

The NOx detected by the NOx sensor 56 is that which has not been stored into the NSR catalyst 22. Upon saturation of the quantity of NOx storage in the NSR catalyst 22, non-stored NOx flows out in the downstream direction. After the saturation, if NOx is detected by the NOx sensor 56, control proceeds to step S116, in which step, the regeneration of the NSR catalyst 22 is then executed.

In step S116, the creation of ozone by the ozone feeder 30 is stopped and the addition of the ozone to the exhaust gas is also stopped.

In next step S118, fuel injection from the fuel injector 42 is executed and fuel is added to the exhaust gas flowing into the DPF 40. The fuel injection quantity of the fuel injector 42 is controlled so that the exhaust gas flowing into the DPF 40 will be a rich air-fuel ratio. An output signal from the air-fuel ratio sensor 54 is fed back during the control of the fuel injection quantity.
The fuel that has been injected from the fuel injector 42 is burned upon reacting with the oxygen in the exhaust gas, and the resulting heat warms the exhaust gas. In addition, excess fuel is left intact in the exhaust gas, passes through the DPF 40, and flows into the NSR catalyst 22. When the high-temperature exhaust gas of a rich air-fuel ratio flows into the NSR catalyst 22, the NOx stored therein is reduced by the HC and CO contained in the exhaust gas, and is progressively removed from the NSR catalyst 22.

Fuel addition for the regeneration of the NSR catalyst 22 is executed only for the required regenerating period calculated from the NOx storage quantity existing immediately before the regeneration. The NOx storage quantity can be estimated and calculated from counts of the cumulative operating period and/or cumulative traveling distance from the previous regenerating process for the NSR catalyst 22. After elapse of the required regenerating period, process control proceeds to step S120 to stop the addition of fuel from the fuel injector 42. This completes the regeneration of the NSR catalyst 22.

### Effects of the exhaust gas purification device in the first embodiment

As described above, supply of ozone to the inside of the catalytic converter 20 by the ozone feeder 30 during lean-burn operation of the engine 10 allows the oxidation of the NOx in the exhaust gas to be accelerated and thus the quantity of NOx storage into the NSR catalyst 22 to be increased. An increase in the quantity of NOx storage into the NSR catalyst 22 extends the regenerating period thereof, with a result that the heat generated during the regeneration of the DPF 40 will have more chances to be utilized for the regeneration of the NSR catalyst 22. The exhaust gas purification device of the present embodiment, therefore, can suppress consumption of the fuel required for the regeneration of the NSR catalyst 22 and DPF 40, and thereby improve fuel efficiency of the engine 10.

### (Second Embodiment)

### Exhaust gas purification device configuration in a second embodiment

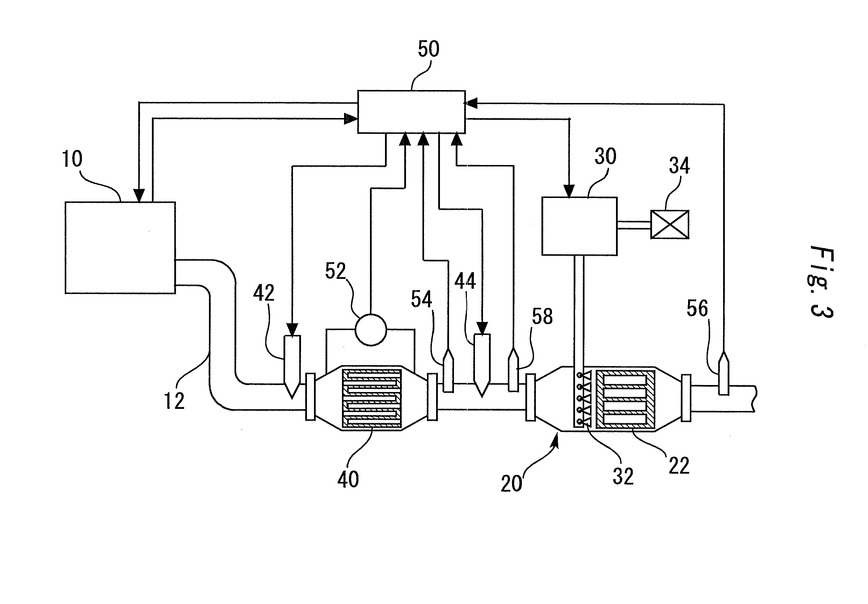

Fig. 3 is a diagram illustrating an exhaust gas purification device configuration in a second embodiment of the invention. The exhaust gas purification device configuration in the present embodiment is described below using Fig. 3. In Fig. 3, sections and components common to those of the exhaust gas purification device according to the first embodiment are each assigned the same reference number. In addition, except when necessary, description of the common sections and components is omitted, with descriptive focus placed only upon configurational differences relative to the first embodiment.

As shown in Fig. 3, in addition to the fuel injector 42 disposed near the inlet of the DPF 40, the exhaust gas purification device of the present embodiment has a fuel injector 44 between the DFP 40 and catalytic converter 20 on the exhaust passage 12. The fuel injector 44, as with the fuel injector 42, injects the same fuel as used for operating the engine 10.

In addition to the air-fuel ratio sensor 54 disposed near the outlet of the DPF 40, the exhaust gas purification device of the present embodiment further has an air-fuel ratio sensor 58 disposed downstream relative to the fuel injector 44, near an inlet of the catalytic converter 20, the air-fuel ratio sensor 58 being adapted to output a signal according to a particular air-fuel ratio of exhaust gas. The fuel injector 44 is installed between the two air-fuel ratio sensors 54, 58.

In the present embodiment, the ozone feeder 30 and the two fuel injectors 42 and 44 are connected to the output section of the controller 50. Also, the plurality of sensors 52, 54, 56 and 58, including the above-described air-fuel ratio sensor 58, are connected to the input section of the controller 50. In addition, information on operating parameters and operating states of the engine 10 is input to the input section of the controller 50. Upon receiving the various input information, the controller 50 controls the ozone feeder 30 and the fuel injectors 42 and 44 in accordance with the predetermined control program.

### Exhaust gas purification device operation in the second embodiment

Next, operation of the exhaust gas purification device of the present embodiment will be described. Except when necessary, description of the device operation common to that of the first embodiment is omitted, with descriptive focus placed only upon operational differences relative to the first embodiment.

### (DPF regeneration and NSR catalyst regeneration)

One of the operational differences between the present embodiment and the first embodiment exists in that the DPF 40 and the NSR catalyst 22 are simultaneously regenerated in the present embodiment. As described in the first embodiment, regenerating the DPF 40 requires adding fuel while ensuring a lean air-fuel ratio state of the exhaust gas flowing into the DPF 40. Regenerating the NSR catalyst 22, on the other hand, requires ensuring a rich air-fuel ratio state of the exhaust gas flowing into the NSR catalyst 22. In the device configuration of the first embodiment, since it has been impossible to make the device satisfy the above two requirements at the same time, the regeneration of the NSR catalyst 22 has been conducted following completion of that of the DPF 40.

In contrast to the first embodiment, the exhaust gas purification device configuration in the second embodiment makes it possible to supply fuel to the NSR catalyst 22 without passing the fuel through the DPF 40. Fuel can also be supplied in divided form to two sections at the same time, that is, an upstream side of the DPF 40 and that of the NSR catalyst 22. In the present embodiment, therefore, the fuel injection quantities of the fuel injectors 42 and 44 are controlled, as appropriate, to supply the exhaust gas of a rich air-fuel ratio to the NSR catalyst 22 while supplying the exhaust gas of a lean air-fuel ratio to the DPF 40. Thus, the DPF 40 and the NSR catalyst 22 can be regenerated simultaneously.

### (More specific processing by the controller)

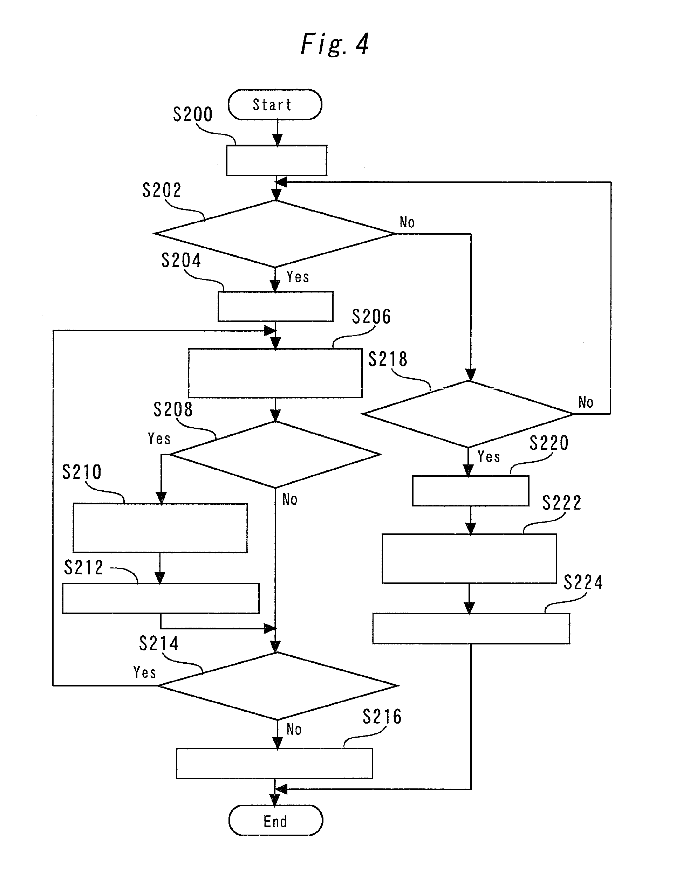

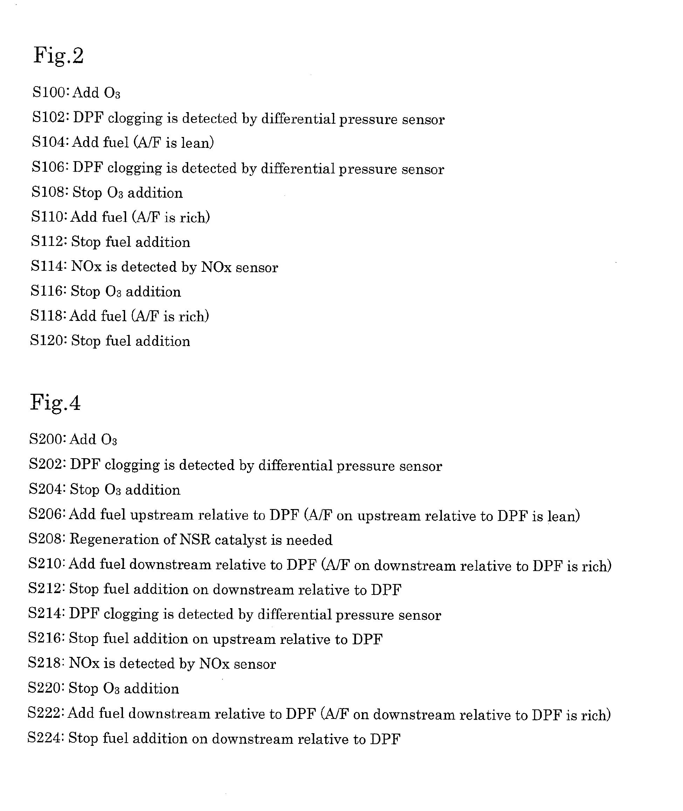

Hereunder, more specific processing that the controller 50 conducts will be described using Fig. 4. Fig. 4 is a flowchart representing the routine executed by the controller 50 in the present embodiment. The above-described addition of ozone and regeneration of the DPF 40 and NSR catalyst 22 are both executed in accordance with the routine shown in Fig. 4.

In first step S200 of the routine shown in Fig. 4, ozone is created from air by the ozone feeder 30 and then the ozone is added to exhaust gas. A gas-phase reaction with the ozone in the catalytic converter 20 accelerates the oxidation of the NOx in the exhaust gas, and hence, storage of the NOx into the NSR catalyst 22.

Whether the clogging of the DPF 40 is detected by the differential pressure sensor 52 is judged in step S202. If the clogging of the DPF 40 is detected, process control advances to step S204, in which step, the creation of ozone by the ozone feeder 30 is then stopped and the addition of the ozone to the exhaust gas is also stopped. Process control further advances to step S206 to execute the regeneration of the DPF 40.

In step S206, fuel injection from the fuel injector 42 is executed and fuel is added to the exhaust gas flowing into the DPF 40. A fuel injection quantity of the fuel injector 42 is controlled so that the exhaust gas flowing into the DPF 40 will be of a lean air-fuel ratio. An output signal from the air-fuel ratio sensor 54 is fed back during the control of the fuel injection quantity. The fuel that has been injected from the fuel injector 42 is burned upon reacting with the oxygen in the exhaust gas, and the resulting heat creates a high-temperature atmosphere in the DPF 40. Thus, particulates present on the DPF 40 are burned upon reacting with excess oxygen present in the exhaust gas, and are progressively removed from the DPF 40.

Whether the regenerating process for the NSR catalyst 22 is necessary is judged in next step S208. This judgment is based upon the quantity of NOx stored at up to a current point of time. The NOx storage quantity can be estimated and calculated from counts of the cumulative operating period and/or cumulative traveling distance from the previous regenerating process for the NSR catalyst 22. If the estimated quantity of NOx storage is in excess of a predetermined reference level, the regenerating process for the NSR catalyst 22 is judged to be necessary. In this case, control is transferred to step S210, in which, the regeneration of the NSR catalyst 22 is executed simultaneously with that of the DPF 40.

In step S210, fuel injection by the fuel injector 44 is also executed downstream relative to the DPF 40, and fuel is added to the exhaust gas flowing into the NSR catalyst 22. A fuel injection quantity of the fuel injector 44 is controlled so that the exhaust gas flowing into the NSR catalyst 22 will be a rich air-fuel ratio. A large amount of fuel does not need to be injected from the fuel injector 44 at this time since fuel addition by the fuel injector 42 is also continued at the upstream side of the DPF 40. An output signal from the air-fuel ratio sensor 58 is fed back during the control of the fuel injection quantity of the fuel injector 44. The NOx stored within the NSR catalyst 22 is reduced by the HC and CO contained in the exhaust gas, and is progressively removed from the NSR catalyst 22.

During the regeneration of the DPF 40, the exhaust gas that have passed through the DPF 40 are heated to a high temperature by the combustion of the added fuel and that of the particulates. Since the heat of the high-temperature exhaust gas can be used during the regeneration of the NSR catalyst 22, there is no need to burn new fuel for heating the NSR catalyst 22, or even if new fuel needs burning, it is enough just to burn a slight amount of fuel. Much of the fuel injected from the fuel injector 44, therefore, can be used to reduce stored NOx.

Fuel addition by the fuel injector 44 for the regeneration of the NSR catalyst 22 is executed only for the required regenerating period calculated from the NOx storage quantity existing immediately before the regeneration. The NOx storage quantity can be estimated and calculated from counts of the cumulative operating period and/or cumulative traveling distance from the previous regenerating process for the NSR catalyst 22. After elapse of the required regenerating period, process control proceeds to step S212, in which step, the addition of fuel by the fuel injector 44 is then stopped. This completes the regeneration of the NSR catalyst 22.

Completion of the regeneration of the NSR catalyst 22 is followed by a re-judgment in step S214. Whether the clogging of the DPF 40 is detected by the differential pressure sensor 52 is re-judged in step S214. Process step S206 is continued if the clogging of the DPF 40 is re-detected or still remains detected. After the regeneration of the NSR catalyst 22, it is judged in step S208 that the regenerating process is unnecessary. Process steps S210 and S212 are therefore skipped and the judgment in step S214 follows.

If, in step S214, the clogged state of the DPF 40 is judged to be cleared, process control advances to step S216. In step S216, the addition of fuel at the upstream side of the DPF 40 by the fuel injector 42 is stopped. This completes the regeneration of the DPF 40.

During above successive processing, the NSR catalyst 22 is regenerated simultaneously with the regeneration of the DPF 40, but there may be a need to regenerate the NSR catalyst 22 before the DPF 40 requires regeneration. If the clogging of the DPF 40 is not detected in step S202, control is transferred to step S218 for a next judgment. Whether NOx is detected by the NOx sensor 56 is judged in step S218. If no NOx is detected, control is returned to the judgment in step S202. Subsequently, either step S202 or S218 is repeated until a positive judgment has been conducted therein.

If NOx is detected by the NOx sensor 56, control proceeds to step 5220, in which step, the regeneration of the NSR catalyst 22 is then executed. In step 5220, the creation of ozone by the ozone feeder 30 is stopped and the addition of the ozone to the exhaust gas is also stopped.

In next step S222, fuel injection from the fuel injector 44 at the downstream side of the DPF 40 is executed and fuel is added to the exhaust gas flowing into the NSR catalyst 22. The fuel injection quantity of the fuel injector 44 is controlled so that the exhaust gas flowing into the NSR catalyst 22 will be a rich air-fuel ratio. An output signal from the air-fuel ratio sensor 58 is fed back during the control of the fuel injection quantity. The fuel that has been injected from the fuel injector 44 is burned upon reacting with the oxygen in the exhaust gas, and the resulting heat warms the exhaust gas. In addition, excess fuel is left intact in the exhaust gas and flows into the NSR catalyst 22. When the high-temperature exhaust gas of a rich air-fuel ratio flows into the NSR catalyst 22, the NOx stored therein is reduced by the HC and CO contained in the exhaust gas, and is progressively removed from the NSR catalyst 22.

Fuel addition for the regeneration of the NSR catalyst 22 is executed only for the required regenerating period calculated from the NOx storage quantity existing immediately before the regeneration. The NOx storage quantity can be estimated and calculated from counts of the cumulative operating period and/or cumulative traveling distance from the previous regeneration of the NSR catalyst 22. After elapse of the required regenerating period, process control proceeds to step S224 to stop the addition of fuel from the fuel injector 44. This completes the regeneration of the NSR catalyst 22.

### Effects of the exhaust gas purification device in the second embodiment

As described above, the exhaust gas purification device of the present embodiment can regenerate the DPF 40 and at the same time, heat the NSR catalyst 22 using the heat generated during the regeneration of the DPF 40. Additionally, the creation of a lean atmosphere in the DPF 40 and that of a rich atmosphere in the NSR catalyst 22 can be achieved by supplying fuel in divided forms to the upstream and downstream sides of the DPF 40. Thus, the NSR catalyst 22 can be regenerated at the same time the DPF 40 is regenerated, and the heat generated during the regeneration of the DPF 40 can be used more effectively.

### Others

While embodiments of the present invention have been described above, the invention is not limited to the embodiments and may be modified without departing from the spirit and scope of the invention. For example, the invention may be modified as follows:

Although the configuration shown in Fig. 1 or 3 includes the gas injection port 32 in the catalytic converter 20, ozone may be supplied to a position other than the gas injection port. If ozone can be reliably added to the exhaust gas flowing into the NSR catalyst, the ozone may be supplied upstream relative to the catalytic converter, on the exhaust passage.

In addition, although BaCO₃ is used as an NOx-retaining substance in the NSR catalyst of the above embodiments, the kind of material used for the NOx-retaining substance is not limited to BaCO₃. That is to say, an alkaline metal such as Na, K, Cs, or Rb, an alkaline earth metal such as Ba, Ca, or Sr, or a rare-earth element such as Y, Ce, La, or Pr may be used according to particular needs. Furthermore, the kind of material used for the active site of the NSR catalyst is not limited to Pt and a noble-metal material such as Rh or Pd may be used according to particular needs.

In terms of functionality, the NSR catalyst can be broken down into a "catalyst" and an "NOx-retaining material". In the NSR catalyst, the noble metal that is the active site, and a support that supports the noble metal are equivalent to the "catalyst", and the NOx-retaining substance and a support that supports the NOx-retaining substance are equivalent to the "NOx-retaining material". The "catalyst" and the "NOx-retaining material" do not always need to be an integrated structure and may be independent structures. The "NOx storage reduction catalyst" pertaining to the present invention is not necessarily an integrated structure of the "catalyst" and the "NOx-retaining material", and includes the "catalyst" and the "NOx-retaining material" in the form of independent structures.

More specifically, in a support arrangement with two independent supports, one of the supports may be used to form the "catalyst" by supporting only a noble metal that is the active site, and the other support may be used to form the "NOx-retaining material" by supporting only the NOx-retaining substance. In such a support arrangement, however, the "catalyst" is desirably provided downstream with respect to the "NOx-retaining material" so that the "catalyst" can process the NOx released from the "NOx-retaining material". Alternatively, although one common support may be used, the noble metal that is the active site, and the NOx-retaining substance may be supported in divided different areas on the common support. For example, the support may be adapted to support the substances separately from each other on the upstream and downstream sides thereof, or upper-layer and lower-layer sides thereof.

In addition, during the regeneration of the NSR catalyst 22 in the above-described embodiments, the addition of ozone is stopped (steps S108 and S116 of the routine shown in Fig. 2, or steps S204 and S220 of the routine shown in Fig. 4), but under certain conditions, the addition of ozone is anticipated to modify fuel composition. Under specific conditions, therefore, adding fuel under a coexisting state of ozone may enhance a stored-NOx reducing effect, and if this is the case, the addition of ozone may be continued.

While, in the above embodiments, the present invention is applied to a diesel engine, the kind of internal combustion engine to which the invention can be applied is not limited to diesel engines. If the invention is applied to the internal combustion engines, including gasoline lean-burn engines, that emit NOx-containing exhaust gases, the advantages described above can be obtained from the application of the invention.

## Claims

1. An exhaust gas purification device for an internal combustion engine, comprising:
an NOx storage reduction catalyst disposed on an exhaust passage of the internal combustion engine;
a filter disposed upstream relative to the NOx storage reduction catalyst, the filter being used to capture particulates contained in exhaust gas;
means for supplying a fuel such that the fuel will be mixed with the exhaust gas flowing into the filter; and
means for supplying ozone downstream with respect to the filter such that the ozone will be mixed with the exhaust gas flowing into the NOx storage reduction catalyst.

2. The exhaust gas purification device for the internal combustion engine according to claim 1, further comprising:
second means for supplying the fuel downstream with respect to the filter such that the fuel will be mixed with the exhaust gas flowing into the NOx storage reduction catalyst.

3. The exhaust gas purification device for the internal combustion engine according to claim 1, wherein the fuel supply means is adapted to:
during regeneration of the filter, execute fuel supply while controlling a supply quantity of the fuel such that an air-fuel ratio of the exhaust gas flowing into the filter will be lean; and
after the regeneration of the filter, continue a predetermined period of fuel supply while controlling the supply quantity of the fuel such that the air-fuel ratio of the exhaust gas flowing into the filter will be rich.

4. The exhaust gas purification device for the internal combustion engine according to claim 2, wherein:
during regeneration of the filter, the fuel supply means executes fuel supply while controlling a supply quantity of the fuel such that an air-fuel ratio of the exhaust gas flowing into the filter will be lean; and
during the execution of fuel supply by the fuel supply means, the second means for supplying the fuel executes a predetermined period of fuel supply while controlling a supply quantity of the fuel such that the air-fuel ratio of the exhaust gas flowing into the NOx storage reduction catalyst will be rich.
